# EUROPÄISCHE PATENTSCHRIFT

(11) **EP 3 504 306 B1**
(45) Veröffentlichungstag und Bekanntmachung des Hinweises auf die Patenterteilung: **18.01.2023**
(21) Anmeldenummer: 17758481.0
(22) Anmeldetag: 22.08.2017
(51) Int. Cl.: C10L 5/44

(54) **BRENNSTOFFE UND ANZÜNDHILFEN AUS MODIFIZIERTEN, NACHWACHSENDEN ROHSTOFFEN**
FUELS AND IGNITION AIDS CONTAINING MODIFIED RENEWABLE MATERIALS
CARBURANTS ET MÈCHES CONTENANT DES MATIÈRES RENOUVELABLES MODIFIÉES

(30) Priorität: 24.08.2016 DE 102016115664
(43) Veröffentlichungstag der Anmeldung: 03.07.2019
(73) Patentinhaber: Tischendorf, Dieter, 36115 Hilders (DE); Tischendorf, Andreas, 36142 Tann (DE)
(72) Erfinder: Tischendorf, Dieter, 36115 Hilders (DE); Tischendorf, Andreas, 36142 Tann (DE); Grigoleit, Uwe, 36304 Alsfeld (DE)
(74) Vertreter: Müller, Eckhard
(86) Internationale Anmeldenummer: PCT/EP2017/071084
(87) Internationale Veröffentlichungsnummer: WO 2018/036993

(56) Entgegenhaltungen:
- EP-A2- 2 109 660
- DE-U1-202012 007 739
- US-A1- 2005 016 062
- US-A1- 2010 146 848
- DATABASE WPI Week 201028 2010 Thomson Scientific, London, GB; AN 2010-E36640 XP002774531, & JP 2010 090382 A (PEGASUS CANDLE KK) 22. April 2010 (2010-04-22)

## Beschreibung

Die vorliegende Erfindung ist in den angefügten Ansprüchen definiert.

Die vorliegende Erfindung betrifft Brennstoffe und Anzündhilfen aus nachwachsenden Rohstoffen und/oder organischen Rest- oder Abfallstoffen, welche zur Eigenschaftsverbesserung mit verschiedenen Zusätzen versehen sind. Ferner betrifft die Erfindung die Verwendung von Fetten und Ölen aus der Kaskaden- oder Sekundärnutzung zur Herstellung solcher Brennstoffe und Anzündhilfen und spezielle Erscheinungs- oder Handelsformen dieser Brennstoffe und Anzündhilfen.

Nicht zuletzt aus Gründen des Klimaschutzes ist es unabdingbar, den Verbrauch von fossilen Energieträgern, wie z.B. Erdöl, Kohle und Gas, zur Energiegewinnung deutlich zu reduzieren. Daher gewinnen Brennstoffe aus nachwachsenden organischen Rohstoffen zunehmend an Bedeutung. Genannt seien hier Stroh, Holz und auch Papier und Pappe, welche hauptsächlich aus diesen Rohstoffen bestehen.

Zur Verbesserung der Brenneigenschaften, zur Heizwerterhöhung und zur Verringerung der Schlackenbildung bei diesen Brennstoffen werden im Stand der Technik zahlreiche Vorschläge gemacht. So ist aus der DE 10 2004 042 659 A1 ein Brennstoffkörper aus primären Abfällen und Restprodukten der Getreideernte und - verarbeitung bekannt, dem zur Verringerung der Schlackenbildung Kalk zugesetzt wird.

DE 20 2006 014 651 U1 beschreibt einen Brennstoff, der zur Heizwerterhöhung und zur Verringerung der Schlackenbildung natürliche organische Öle und Fette und Natriumperborat enthält.

DE 08212935 U1 betrifft Brennstoffbriketts, welche aus einer durch Zellulosekleister zusammengehaltenen Mischung aus Gummipartikeln, Holzspänen und Papierteilchen bestehen. Dabei sind die zellulosehaltigen Partikel mit Öl bzw. Altöl getränkt.

Brennstoffbriketts auf Holzbasis, bei deren Herstellung auf einer Brikettiermaschine ölhaltige Pflanzenteile als Bindemittel und Nadeln oder Blätter als Duftstoffzusatz zugesetzt werden, sind in DE 196 31 762 A1 vorgeschlagen.

DE 20 2015 005 372 U1 und DE 20 2016 102 694 U1 betreffen Anzündhilfen, die aus getrockneten Tannen- oder Fichtenzapfen bestehen, die mit Pappe oder Papier und einem brennbaren Fett versehen sind, oder bei denen der Brennkörper aus einem mit Wachs getränkten, watteartigen Zellstoffmaterial hergestellt ist.

US 2010/146848 beschreibt Festbrennstoffe enthaltend eine Mischung aus cellulosehaltigen Material und gebrauchten, aufgearbeiteten Fett- und Ölresten aus der Lebensmittelerzeugung.

Aufgrund der bestehenden und zunehmenden Verknappung von Rohstoffen ist es erforderlich, neue Verarbeitungswege, Anwendungsbereiche und Verwertungsmöglichkeiten für Abfallstoffe zu entwickeln, um solche erneut unter geringstmöglicher Qualitätseinbuße einer weiteren Verwendung zuführen zu können. Die in allen Bereichen des Gesellschaftslebens erkennbare Trendwende, Abfallprodukte aus Primäranwendungsbereichen als wieder verwertbaren Wertstoff zu betrachten und dem Wirtschaftskreislauf zuzuführen, basiert nicht nur auf ökologischen, sondern zunehmend auch auf ökonomischen und wirtschaftlichen Interessen.

So werden z.B. in dem europäischen Patent EP 2 109 660 B1 Verfahren zur Erzeugung von Ausgangs- oder Zusatzstoffen für Kosmetika, Pharmaka und/oder Brenn- oder Treibstoffe für Heizeinrichtungen oder Brennkraftmaschinen und für Kerzen oder Thermospeichermaterialien beschrieben. Dabei werden kontaminierte Materialien aus der K1, K2 oder K3-Klassifizierung (EU-Verordnung 1774/2002 bzw. EU-Verordnung 1069/2009) für den dortigen erfindungsgemäßen Zweck aufbereitet.

Bei den im Stand der Technik bekannten Brennstoffen werden deren Anbrenn- oder Brenneigenschaften mit Stoffen aus der Petrochemie oder mit Grundstoffen aus der Primärerzeugung, wie Fette und Öle aus bevorzugt Palm- oder Rapsölen, modifiziert, wobei diese Substanzen dann für ihren eigentlichen Bestimmungszweck nicht mehr zur Verfügung stehen. Auch der vorgeschlagene Einsatz von Sekundärmaterialien in Form von Altöl und Gummipartikeln ist für Heiz- und Verbrennungszwecke ungeeignet, da mit diesem eine nicht tolerierbare Umweltbelastung in Form von toxischen Substanzen einhergeht. Schließlich ist in vielen Fällen bei den Brennprodukten des Standes der Technik ihre einfache Handhabbarkeit und oder ihre Portionierbarkeit stark eingeschränkt, was ihre Anwendung in verschiedenen Fällen beeinträchtigt.

Aus der WO 2012/068 640 A1 ist ein Brennstoff für die CO-Verbrennung mit Kohle in einem kohlebefeuerten Kraftwerk mit niedriger CO₂-Emmission bekannt, mit einem vorgegebenen Anteil von Altöl und einem Anteil von Zellulosematerial zur Absorption des Altöls. Bei diesem Altöl kann es sich um Rest- oder Abfallstoffe verschiedenen Ursprungs handeln.

Aus der EP 1 600 493 A2 ist es bekannt, Holz bzw. holzhaltige Materialien zur leichteren Anwendbarkeit und Entzündbarkeit in einem Beutel/Sack aus Leinen zu verpacken. Zusätzlich ist dieser Beutel oder Sack mit einem Öl imprägniert. Bei dem eingesetzten Öl handelt es sich um hochwertige natürliche oder pflanzliche Öle, die auch parfümiert sein können.

Vor diesem Hintergrund lag der vorliegenden Erfindung die Aufgabe zugrunde, Brennstoffe und dergleichen bereitzustellen, die möglichst vollständig aus nachhaltigen und regional verfügbaren Rohstoffen hergestellt werden. Dabei sollten diese Rohstoffe in der erfindungsgemäßen Verwendung nicht in Konkurrenz zu einer anderen Verwendung, z.B. als Bestandteile der Nahrungskette, treten. Schließlich war es ein Ziel der vorliegenden Erfindung trotz der genannten Rahmenbedingungen, Brennstoffe und dergleichen bereitzustellen, welche im Hinblick auf die Produkte des Standes der Technik sehr gute Anbrenn- und Brenneigenschaften bei möglichst einfacher Handhabbarkeit aufweisen.

Diese Aufgabe wird wie nachfolgend beschrieben in den Ansprüchen gelöst.

Bei den Rohstoffen (Rohstoffe A) für die erfindungsgemäßen Brennstoffe und Anzündhilfen (gemeinsam auch als Brennstoffe bezeichnet) handelt es sich einmal um Stoffe aus der Sekundär- oder Kaskadennutzung (Abfall- und Reststoffe), die als solche direkt verbrannt werden können, ohne dass dabei die Umwelt belastende Stoffe freigesetzt werden. Dabei handelt es sich bevorzugt um cellulose- oder hemicellulosehaltige Substanzen. Bevorzugte Vertreter sind z.B. Holz oder Holzreste in Form von Sägemehl, Spänen, Fasern, kleinen Stückchen und auch Holzstaub, welche auch verpresst und miteinander vermischt sein können. Ferner Papier und Pappe in beliebiger Qualität. Abfall- und Reststoffe aus dem Getreideanbau und der Getreideverarbeitung wie z.B. Spreu, Druschabfälle, Häcksel, Stäube, Mehl und Stroh. Dabei wird der Begriff Stroh als Sammelbegriff für ausgedroschene und/oder trockene Halme und Blätter von Pflanzen, Protisten jeder Art und Größe verwendet, wie auch z.B. für Getreide, Ölpflanzen, Faserpflanzen, Hülsenfrüchte etc. Es handelt sich erfindungsgemäß bevorzugt um Pflanzen, die jährlich nachwachsen und somit das Erfordernis der Nachhaltigkeit insbesondere erfüllen. Erfindungsgemäß wird Stroh auch in Form von (gedrehten) Strohseilen eingesetzt.

Die vorstehende Aufzählung von Rohstoffen A ist nicht vollständig und kann vom Fachmann in Kenntnis der vorliegenden Erfindung unmittelbar auf weitere Stoffe und Materialien, die für den erfindungsgemäßen Zweck geeignet sind, ausgedehnt werden.

Die genannten Materialien zeichnen sich zwar beim Verbrennen durch eine hohe Energieausbeute aus, sind aber bezüglich Anbrenn- und Brennverhalten und Handhabbarkeit verbesserungswürdig.

Erfindungsgemäß verbessert oder modifiziert im Hinblick auf die genannten Kriterien werden diese Rohstoffe A durch den Zusatz von Ölen und Fetten oder deren Derivaten bzw. Bestandteilen wie Fettsäuren, Fettalkoholen, Glycerin aus dem Sekundärbereich oder der Kaskadennutzung. Diese Fette und Öle sind Bestandteile von oder stellen selbst Abfall- oder Reststoffe aus der Kaskaden- oder Sekundärnutzung dar und müssen in der Regel aufwendig entsorgt oder einer weiteren Nutzung zugeführt werden (Rohstoffe B). Kaskadennutzung bedeutet für die Zwecke der vorliegenden Erfindung die vorherige einfache oder mehrfache Nutzung einer Substanz oder eines Materials in gleichen oder verschiedenen Verwendungen.

Ein unmittelbarer erfindungsgemäßer Einsatz der Rohstoffe B ist allerdings in der Regel nicht möglich, da aus dem Abfallbereich der Sekundär- oder Kaskadennutzung (z.B. Altspeisefette, Rückläufer und Fehlchargen aus der Lebensmittel- und Kosmetikindustrie, stark kontaminierte K1-K3 Materialien, die unter die EU-VO 1774/2002 bzw. EU Verordnung (EG) 1069/2009 fallen, gebrauchte Pflanzenöle und Tierfette aus Schlachtabfällen, sowie Futtermittelbereichsfette und -öle wie Fisch- und Krustenöle, Mais-, Oliven-, Baumwollsamen-, Soja-, Kokos-, Palmkern-, Sonnenblumen- und Rapsöl) undefinierte Substanzmischungen anfallen. Hinzu kommen durch die Verarbeitung entstandene Hitzeveränderungen wie Polymerisations- und/oder Abbauprodukte. Neben der undefinierten chemischen Zusammensetzung stehen auch oft die physikalischen Parameter, wie z.B. ein zu niedriger Schmelzpunkt solcher Substanzgemische, einem erfindungsgemäßen Einsatz entgegen. Ein zu niedriger Schmelzpunkt der Öl- und Fettkomponente erschwert die Verarbeitung, die Handhabbarkeit und die Lagerung, insbesondere bei erhöhten Temperaturen, der so hergestellten Brennstoffe.

Daher müssen die erfindungsgemäß nutzbaren Abfall- und Reststoffe aus der Sekundär- oder Kaskadennutzung vor ihrer Verwendung aufbereitet werden. Dazu sind bevorzugt die folgenden Verfahrensschritte geeignet, die bevorzugt alle in der angegebenen Reihenfolge durchgeführt werden. In Abhängigkeit von dem Zustand und der Qualität der zur Verfügung stehenden Fett- und Ölkomponente kann auch auf einen einzelnen Schritt oder auf einzelne Schritte verzichtet werden.

Das vorliegende Material aus der Sekundär- oder Kaskadennutzung wird verflüssigt und fakultativ über ein Filtersystem zur Eliminierung von enthaltenen Fremdstoffen geleitet.

In einem Mischungsreaktor werden die gewünschten Fett- und Ölmaterialien mittels Sorption (Medien: Zeolithe, Aktivkohle, Sägespäne etc.) an einer Phasengrenze angereichert und über einen Zeitraum von bevorzugt 15-45 min gewaschen, bis das evtl. saure Waschwasser klar abläuft. Die Temperatur liegt bei diesem Vorgang, der unter Umständen ein- oder mehrfach zu wiederholen ist, bei bevorzugt ca. 70-80ºC.

Hieran schließt sich in der Regel ein weiterer Filtrationsschritt an. Bei diesem Schritt ist das Filtermedium (z.B. Zeolithe) bevorzugt so zu gestalten, dass Bereiche bis ca. 1,2 µm erfasst werden können und eine Lipidpermeabilität erhalten wird und bleibt. Das Produkt dieser Filtration kann bei Bedarf nochmals dem Schritt 2 unterworfen werden, wobei dieser dann bei Temperaturen von bevorzugt 50-110ºC durchgeführt wird.

Das Produkt der vorangehenden Verfahrensschritte kann einer Destillation unterworfen werden, um eine weitere (Fein-) Reinigung vorzunehmen. Z.B. lassen sich auf diese Weise unerwünschte olfaktorische Verunreinigungen abtrennen. Bevorzugt erfolgt die Destillation bis zu einer Säurezahl von kleiner als 2. Dies erlaubt auch die weitere erfindungsgemäße Verwendung hoch abgebauter Stoffe aus der Zweit- oder Drittnutzung. Eine schrittweise Kontrolle und Probennahme sind in diesem Zusammenhang angezeigt.

Die Aufarbeitung umfasst einen Hydrierschritt. Dieser ist z.B. in der EP 2 109 660 B1 ausführlich beschrieben und dient einmal zur sicheren Dekontamination der eingesetzten Rohstoffe B von Bakterien, Pilzen, Viren etc. (z.B. bei K1-K3 Materialien) und zum anderen zur Fetthärtung durch Absättigung von Doppelbindungen und zum Erhalt eines möglichst homogenen Endprodukts. Der Prozess wird bevorzugt bei 200-280ºC und Drücken von 0,2 bis 5 MPa durchgeführt. Durch Probennahme und Bestimmung der Jodzahl (bevorzugt z.B. 1-120) lässt sich der gewünschte Hydrierungsgrad steuern. Im Bereich der hier herzustellenden Brennstoffe haben sich die Spaltungen der Doppelbindungen als vorteilhaft erwiesen, um spontanen Selbstentzündungsprozessen vorzubeugen und ohne dabei einen schnellen Abbrand und saubere Brennvorgänge negativ zu beeinflussen.

Ein sich anschließender Filtrationsprozess kann vorteilhaft sein, um eventuell vorhandene Reste der gängigen Hydrierungskatalysatoren und unerwünschte Polymerisationsprodukte zu entfernen.

Das so erhaltene Produkt wird bevorzugt bei Temperaturen von 25-100ºC in Thermospeicher eingefüllt und abgelagert. Eine zu kurze Kühlungszeit bei hohen Temperaturgradienten für die aufgearbeiteten Rohstoffe B ist in der Regel zu vermeiden, da dies zu instabilen Kristallstrukturen führen kann, die sich negativ auf die Eigenschaften des Brennstoffendproduktes auswirken können.

Die aufgeführten Verfahrensschritte 1-7 sind im Stand der Technik grundsätzlich bekannt. Ihre Ausgestaltung und Reihenfolge können von dem Fachmann einfach an die jeweiligen Ausgangsmaterialien (Rohstoffe B) angepasst werden.

Die erhaltenen aufgearbeiteten Rohstoffe B weisen bevorzugt Schmelzpunkte im Bereich von 30°C bis 60ºC auf.

Die verschiedenen (aufgearbeiteten) Rohstoffe B können zur und nach ihrer Aufarbeitung für die Zwecke der Erfindung grundsätzlich in jedem gewünschten Verhältnis gemischt und eingesetzt werden. Zur weiteren Verbesserung der Eigenschaften kann es unter Umständen angezeigt sein, geringe Mengen an Primärfetten und -ölen dem aufgereinigten Material zuzusetzen.

Die erfindungsgemäß aufgearbeiteten Rohstoffe B weisen eine Reinheit und Beschaffenheit auf, welche deren unbedenklichen Einsatz für eine Reihe industrieller und handwerklich hergestellter Produkte ermöglichen. Sie sind nach entsprechender Aufarbeitung auch im Lebensmittel- und Futtermittelsektor verwendbar. Als Beispiele seinen genannt: Glycerin bzw. glycerinhaltige Stoffe aus der Kaskadennutzung, wobei das Glycerin nach der beschriebenen Behandlung z.B. in der Nahrungsmittelindustrie, als Löse- und Feuchthaltemittel für Tabak und Kosmetika und als Bestandteil von Frostschutz- und Schmiermitteln wieder verwendet werden kann. Des Weiteren eignen sich so erhaltene Fette, Fettsäuren und Fettalkohole z.B. als Brennstoff für Verbrennungskraftmaschinen.

Zur Herstellung der erfindungsgemäßen Brennstoffe werden die aufgearbeiteten Rohstoffe B den Rohstoffen A zugesetzt. Bzgl. der möglichen Kombinationen der Rohstoffe A und der aufgearbeiteten Rohstoffe B (sowohl hinsichtlich der Zusammensetzung der Rohstoffe A und der aufgearbeiteten Rohstoffe B als auch hinsichtlich der Zusammensetzung der Kombination von A und aufgearbeitetem B) bestehen grundsätzlich keine Beschränkungen. Bevorzugt sind Verhältnisse von A:B im Bereich 90:10 bis 10:90, insbesondere von ca. 50:50 (alle Angaben in Gew.-%). Die Rohstoffe A können dabei vorbehandelt sein. Das bedeutet, dass diese Materialien z.B. gemischt, gepresst als Pellets oder Granulat oder zu einer Art Seil gedreht, z.B. für Fasern und Stroh um die Energiedichte zu erhöhen, vorliegen können. Die Rohstoffe A werden bevorzugt mit den aufgearbeiteten Rohstoffen B überzogen, mit den aufgearbeiteten Rohstoffen B besprüht oder in die aufgearbeiteten Rohstoffe B getaucht. Auch können die Rohstoffe A und die aufgearbeiteten Rohstoffe B gemischt und evtl. anschließend zu Pellets oder Granulat verpresst werden. Bzgl. der Art und Weise wie man die Rohstoffe A mit den aufgearbeiteten Rohstoffen B versetzt bestehen keinerlei Beschränkungen. Diese kann an die gegebenen Materialien und Verwendungszwecke bestmöglich angepasst werden. Auch kann der (notwendige) Grad der Aufarbeitung der Rohstoffe B höchst unterschiedlich sein. Dieser reicht von einer Aufarbeitung die nur einen Hydrierschritt umfasst bis zu einem vollständigen Einsatz aller beschriebenen Verfahrensschritte. Dies wird erfindungsgemäß von dem Begriff Aufarbeitung bzw. aufgearbeitet umfasst.

Die erfindungsgemäß hergestellten Brennstoffe können in den unterschiedlichsten Erscheinungsformen hergestellt und angeboten werden, z.B. als Seilstücke, in Form von Briketts, Platten, Würfel, Sticks, Pellets, Granulat und als Stäube verschiedenster Korngrößen. Als besonders vorteilhaft für die Handhabbarkeit und Portionierbarkeit, insbesondere in der Verwendung als Anzündhilfen wie z.B. für Grillanzünder und Anzünder für Kamin- oder Kachelöfen, hat es sich erwiesen, wenn man die erfindungsgemäßen Brennstoffe verpackt. Bevorzugt ist dabei eine Verpackung in Säcke oder Beutel unterschiedlichster Größe, die man als kleine, große oder sehr große Teebeutel beschreiben kann. Diese können dann wiederum in anderen Verpackungsmitteln (z.B. Schachteln oder Kisten) verpackt sein.

In diese Beutel werden die Rohstoffe A gefüllt, die mit den aufgearbeiteten Rohstoffen B bereits versetzt sein können aber nicht sein müssen. Hierfür eignen sich besonders kleinteilige oder feinkörnige Rohstoffe A wie z.B. Stäube. Die so gefüllten Beutel werden anschließend mit den aufgearbeiteten Rohstoffen B be- oder übersprüht oder in die aufgearbeiteten Rohstoffe B getaucht, sodass auf ihnen ein Fett- oder Ölüberzug entsteht. Dieser schützt Beutel samt Inhalt vor Feuchtigkeit, sodass dieser Brennling z.B. beim Grillen auch bei Regen angezündet werden kann und sicher abbrennt. Ferner wird auch bei der Lagerung eine Sättigung mit Umgebungsfeuchtigkeit vermindert und ein sicheres An- und Abbrennverhalten sichergestellt. Zusätzlich können die Rohstoffe A z.B. mit Fettgranulat in einer Mischtrommel vermischt und anschließend die Mischung über eine Füllstation (Teebeutelfüllanlage) in die Beutel abgefüllt werden. Als Wandmaterial für die Beutel oder Säcke eignen sich verschiedene Materialien wie z.B. saugfähiges Papier, Filterpapier, Zellstoffe etc.

Schließlich können den erfindungsgemäßen Brennstoffen Duft- und Farbstoffe (z.B. Zedernholzöl) und/oder weitere Zumischungen, wie z.B. pyrotechnische Stoffe zur Erzeugung von Lichteffekten (z.B. Cu-Pulver), zugesetzt werden. Dabei sollten in der Regel 2-3 Gew.-% bezogen auf den Gesamtbrennstoff nicht überschritten werden. Meist sind bereits deutlich geringere Mengen ausreichend, um die gewünschten olfaktorischen und optischen Effekte zu erzielen.

Die erfindungsgemäßen Brennstoffe zeichnen sich durch ein sicheres An- und Abbrennverhalten, gute Handhabbarkeit und Portionierbarkeit aus. Hervorzuheben ist der Nachhaltigkeitsaspekt dieser Brennstoffe, die ausschließlich aus Rest- und Abfallstoffen hergestellt werden können, die zudem regional in ausreichender Menge verfügbar sind und daher nicht über große Entfernungen transportiert werden müssen. Diese Brennstoffe oder Brennlinge sind überdies hydrophobierend ausgerüstet, was deren Abbauprozesse signifikant verzögert und die Freisetzung von Kohlenstoffoxiden vermindert oder verhindert. Die Freisetzung von Kohlenmonoxid ist z.B. ein nicht zu unterschätzendes Problem in Speichern oder Behältern, in denen unbehandelte Holzpellets gelagert werden.

## Patentansprüche

1. Brennstoff oder Anzündhilfe enthaltend cellulose- und/oder hemicellulosehaltiges Material und Öle und/oder Fette oder deren Derivate oder Bestandteile in Form von Fettsäuren, Fettalkoholen oder Glycerin, **dadurch gekennzeichnet, dass** es sich bei den Ölen, Fetten und deren Derivate um aufgearbeitete Substanzen aus Abfall- und Reststoffen aus der Sekundär- oder Kaskadennutzung handelt, die vor der Aufarbeitung nicht unmittelbar als Brennstoffe oder deren Bestandteile eingesetzt werden können, wobei die Aufarbeitung einen Hydrierschritt umfasst.

2. Brennstoff oder Anzündhilfe nach Anspruch 1, **dadurch gekennzeichnet, dass** es sich bei den Abfall- und Reststoffen um Altspeisefette, Rückläufer und Fehlchargen aus der Lebensmittel- und Kosmetikindustrie, gebrauchte Pflanzenöle oder um Tierfette aus Schlachtabfällen handelt.

3. Brennstoff oder Anzündhilfe nach Anspruch 1 oder 2, **dadurch gekennzeichnet, dass** die Abfall- und Reststoffe einer weiteren chemischen und/oder physikalischen Aufarbeitung unterworfen werden.

4. Brennstoff oder Anzündhilfe nach einem der Ansprüche 1 bis 3, **dadurch gekennzeichnet, dass** die Öle und Fette aus nach der EU-Verordnung 1774/2002 als K1, K2 oder K3 klassifizierten Materialien stammen.

5. Brennstoff oder Anzündhilfe nach einem der Ansprüche 1 bis 4, **dadurch gekennzeichnet, dass** es sich bei dem cellulose- oder hemicellulosehaltigen Material um Holzreste oder um Abfall- und Reststoffe aus Süß- und/oder Sauergräsern, dem Getreideanbau oder der Getreideverarbeitung handelt.

6. Brennstoff oder Anzündhilfe nach Anspruch 5, **dadurch gekennzeichnet, dass** es sich bei den Abfall- und Reststoffen aus dem Getreideanbau und der Getreideverarbeitung um Spreu, Druschabfälle, Häcksel, Stäube, Mehl oder Stroh handelt.

7. Brennstoff oder Anzündhilfe nach Anspruch 6 in Form eines aus Stroh gebildeten Seils

8. Verfahren zur Herstellung eines Brennstoffs oder einer Anzündhilfe nach einem der Ansprüche 1 bis 7, wobei das cellulose- oder hemicellulosehaltige Material mit den aufgearbeiteten Ölen und/oder Fetten gemischt, besprüht oder in diese getaucht wird, wobei die Aufarbeitung der Öle und/oder Fette einen Hydrierschritt umfasst.

9. Verwendung von aufgearbeiteten Fetten und/oder Ölen aus der Kaskaden- oder Sekundärnutzung zur Herstellung eines Brennstoffs oder einer Anzündhilfe nach einem der Ansprüche 1 bis 7, wobei die Aufarbeitung der Fette und/oder Öle einen Hydrierschritt umfasst.

## Claims

1. Fuel or ignition aid comprising cellulosic and/or hemicellulosic material and oils and/or fats or derivatives thereof or constituents in the form of fatty acids, fatty alcohols or glycerol, **characterized in that** the oils, fats and derivatives thereof are processed substances originating from wastes and residues from secondary utilization or cascade utilization that prior to the processing cannot be used directly as fuels or constituents thereof, where the processing comprises a hydrogenating step.

2. Fuel or ignition aid according to Claim 1, **characterized in that** the wastes and residues are used edible fats, returns and off-specification batches from the food and cosmetics industries, used vegetable oils, or animal fats from slaughter wastes.

3. Fuel or ignition aid according to Claim 1 or 2, **characterized in that** the wastes and residues are subjected to a further chemical and/or physical processing.

4. Fuel or ignition aid according to any of Claims 1 to 3, **characterized in that** the oils and fats originate from materials classified under EU Regulation 1774/2002 as C1, C2 or C3.

5. Fuel or ignition aid according to any of Claims 1 to 4, **characterized in that** the cellulosic or hemicellulosic material comprises wood residues or wastes and residues from grasses and/or sedges, from cereal cultivation or cereal processing.

6. Fuel or ignition aid according to Claim 5, **characterized in that** the wastes and residues from cereal cultivation and cereal processing are chaff, threshing wastes, chopped straw, dusts, flour or straw.

7. Fuel or ignition aid according to Claim 6 in the form of a rope formed from straw.

8. Process for producing a fuel or an ignition aid according to any of Claims 1 to 7, where the cellulosic or hemicellulosic material is mixed with, sprayed with or immersed into the processed oils and/or fats, the processing of the oils and/or fats comprising a hydrogenating step.

9. Use of processed fats and/or oils from cascade utilization or secondary utilization for producing a fuel or an ignition aid according to any of Claims 1 to 7, where the processing of the fats and/or oils comprises a hydrogenating step.

## Revendications

1. Combustible ou allume-feu contenant une matière contenant une cellulose et/ou une hémicellulose et des huiles et/ou des graisses ou leurs dérivés ou des ingrédients sous forme d'acides gras, d'alcools gras ou de glycérine, **caractérisé en ce que** les huiles, les graisses et leurs dérivés sont des substances traitées provenant de déchets et de résidus issus de l'utilisation secondaire ou en cascade, qui ne peuvent pas être utilisés directement, avant le traitement, comme combustibles ou leurs ingrédients, le traitement comprenant une étape d'hydrogénation.

2. Combustible ou allume-feu selon la revendication 1, **caractérisé en ce que** les déchets et les résidus sont des graisses alimentaires usagées, des produits retournés et des mauvais lots de l'industrie alimentaire et cosmétique, des huiles végétales usagées ou des graisses animales issues de déchets d'abattoir.

3. Combustible ou allume-feu selon la revendication 1 ou 2, **caractérisé en ce que** les déchets et résidus sont soumis à un traitement chimique et/ou physique supplémentaire.

4. Combustible ou allume-feu selon l'une quelconque des revendications 1 à 3, **caractérisé en ce que** les huiles et les graisses proviennent de matières classifiées comme K1, K2 ou K3 selon le règlement de l'UE 1774/2002.

5. Combustible ou allume-feu selon l'une quelconque des revendications 1 à 4, **caractérisé en ce que** la matière contenant une cellulose et/ou une hémicellulose est des résidus de bois ou des déchets et des résidus provenant de graminées et de cypéracées, de la culture de céréales et/ou de la transformation de céréales.

6. Combustible ou allume-feu selon la revendication 5, **caractérisé en ce que** les déchets et résidus provenant de la culture de céréales et de la transformation de céréales sont des balles, des résidus de battage, des copeaux, des poussières, de la farine ou de la paille.

7. Combustible ou allume-feu selon la revendication 6 sous forme d'une corde formée de paille.

8. Procédé de préparation d'un combustible ou d'un allume-feu selon l'une quelconque des revendications 1 à 7, la matière contenant une cellulose ou une hémicellulose étant mélangée ou pulvérisée avec les huiles et/ou graisses traitées, ou immergée dans celles-ci, le traitement des huiles et/ou des graisses comprenant une étape d'hydrogénation.

9. Utilisation de graisses et/ou d'huiles traitées provenant de l'utilisation en cascade ou secondaire pour la préparation d'un combustible ou d'un allume-feu selon l'une quelconque des revendications 1 à 7, le traitement des graisses et/ou des huiles comprenant une étape d'hydrogénation.
